# EUROPÄISCHE PATENTSCHRIFT

(11) **EP 3 904 249 B1**
(45) Veröffentlichungstag und Bekanntmachung des Hinweises auf die Patenterteilung: **22.03.2023**
(21) Anmeldenummer: 21170348.3
(22) Anmeldetag: 26.04.2021
(51) Int. Cl.: B65G 47/244, B65G 54/00, B65G 54/02, H02K 41/02

(54) **PLANARMOTOR MIT EINER FÜHRUNGSVORRICHTUNG FÜR SHUTTLES DES PLANARMOTORS**
PLANAR MOTOR WITH A GUIDING DEVICE FOR SHUTTLES OF A PLANAR MOTOR
MOTEUR PLANAIRE AVEC DISPOSITIF DE GUIDAGE POUR NAVETTES D'UN MOTEUR PLANAIRE

(30) Priorität: 27.04.2020 AT 503582020
(43) Veröffentlichungstag der Anmeldung: 03.11.2021
(73) Patentinhaber: B&R Industrial Automation GmbH, 5142 Eggelsberg (AT)
(72) Erfinder: Flixeder, Stefan, 5142 Eggelsberg (AT); Hauer, Michael, 5142 Eggelsberg (AT); Haudum, Martin, 5142 Eggelsberg (AT)
(74) Vertreter: Patentanwälte Pinter & Weiss OG

(56) Entgegenhaltungen:
- EP-A1- 3 501 878
- WO-A1-2018/067567
- WO-A1-2018/176137
- DE-A1-102014 116 232
- IT-A1- BO20 100 137
- JP-A- H08 282 842
- JP-B2- 6 526 446
- US-A1- 2020 031 591

## Beschreibung

Die gegenständliche Offenbarung betrifft einen Planarmotor mit zumindest einem ersten Stator und mit zumindest einem Shuttle, wobei eine Führungsvorrichtung für das zumindest eine Shuttle des Planarmotors vorgesehen ist, wobei die Führungsvorrichtung ein erstes Ende und ein zweites Ende aufweist und zwischen dem ersten Ende und dem zweiten Ende einen Posenverlauf des Shuttles definiert, wobei das erste Ende eine Einleitpose des Shuttles definiert und wobei das erste Ende am ersten Stator des Planarmotors so angeordnet ist, dass die Einleitpose einer betriebsgerecht ansteuerbaren Pose in Bezug auf den ersten Stator entspricht, wobei das zweite Ende eine Ausleitpose des Shuttles definiert, wobei das zweite Ende an dem ersten Stator oder einem zweiten Stator des Planarmotors so angeordnet ist, dass die Ausleitpose in Bezug auf den ersten Stator oder den zweiten Stator einer betriebsgerecht ansteuerbaren Pose entspricht. Weiters betrifft die Erfindung ein Verfahren zum Transportieren eines Shuttles mit einem solchen Planarmotor.

Planarmotoren sind grundsätzlich im Stand der Technik bekannt. Die US 9,202,719 B2 offenbart beispielsweise den grundlegenden Aufbau und die Funktionsweise eines solchen Planarmotors.

Ein Planarmotor weist im Wesentlichen eine Transportebene auf, entlang derer eine oder mehrere Transporteinheiten, sogenannte Shuttles, hauptsächlich zweidimensional bewegt werden können. Dazu sind am Planarmotor in der Regel an der Transportebene verteilt Antriebsspulen vorgesehen, die von einer Steuerungseinheit angesteuert werden, um ein bewegtes Magnetfeld in die gewünschte Bewegungsrichtung zu erzeugen. Die (üblicherweise fix montierten) Einheiten, welche die Antriebsspulen beinhaltet und die Transportebene ausbilden, werden allgemein als Stator bezeichnet. Alternativ können auch bewegbar angeordnete Permanentmagneten zur Erzeugung des bewegten Magnetfeldes vorgesehen sein. Weiters ist es auch denkbar, dass am Stator ausschließlich fixe Permanentmagnete montiert sind und das bewegte Magnetfeld am Shuttle erzeugt wird. Im Zusammenhang mit der gegenständlichen Offenbarung werden hierin unabhängig von der Funktionsweise die ortsfesten Einheiten des Planarmotors allgemein als Statoren und die an den Statoren bewegten Einheiten als Shuttles bezeichnet.

An den Shuttles sind Antriebsmagnete (Permanentmagnete oder Elektromagnete) zweidimensional verteilt angeordnet, die mit dem Magnetfeld des Stators zusammenwirken, sodass eine Antriebskraft in die gewünschte Bewegungsrichtung auf die Transporteinheit ausgeübt wird. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen des Shuttles in der Transportebene möglich sind. Ein Planarmotor kann beispielsweise als Transporteinrichtung in einem Produktionsprozess genutzt werden, wobei sehr flexible Transportprozesse mit komplexen Bewegungsprofilen realisiert werden können.

Moderne Planarmotoren erlauben es, hochpräzise Bewegungen eines über dem Stator schwebenden Shuttles in Richtung aller sechs Starrkörper-Freiheitsgrade auszuführen. Durch einen modularen Aufbau des Stators (in Form einer Segmentanordnung) sind translatorische Bewegungen in zwei Hauptbewegungsrichtungen (Bezogen auf ein mit der Transportebene ortsfest definiertes Koordinatensystem) im Wesentlichen uneingeschränkt möglich, außerdem können noch eine Translation in die dritte Raumrichtung ("Anheben" bzw. "Absenken") sowie Rotationen (bis zu einer gewissen Auslenkung) in zumindest einem eingeschränkten Maß ausgeführt werden. Die dafür erforderlichen Motorkräfte und - momente werden mittels (Elektro-) Magnetismus erzeugt. Die translatorische Bewegung entlang der dritten Raumrichtung (Hochachse), sowie die Rotationsbewegungen werden als Nebenbewegungsrichtungen bezeichnet.

Auch wenn die Bewegungen des Shuttles mit herkömmlichen Planarmotoren innerhalb der vorgegebenen Grenzen schnell und präzise ausgeführt werden können, stellen die Grenzen der Regelbarkeit eine bislang unüberwindliche Hürde dar. Ein Verlust der Regelbarkeit des Shuttles (auch in nur einer einzigen Nebenbewegungsrichtung) könnte zu undefinierten und unkontrollierbaren Zuständen des Planarmotors führen und ist daher unbedingt zu vermeiden.

WO 2018/176137 A1 offenbart Planarmotoren mit zahlreichen unterschiedlich ausgebildeten Shuttles und Statoren. Unter anderem lehrt dieses Dokument, in einem Übergabebereich zwischen einem Stator des Planarmotors und einem statorlosen Transportsystem (z.B. einem Förderband, Robotergreifer oder ähnlichem) den Stator mit Führungsbahnen abzusichern, sodass das Shuttle zuerst schwebend vom Stator in die Führungsbahn bewegt wird, dann auf der Führungsbahn (etwa auf Rollen) gleitet und von dem statorlosen Transportsystem weiterbewegt wird, wenn es den Bereich der Magnetwirkung des Stators verlassen hat.

DE 10 2014 116232 A1 offenbart eine Transporteinrichtung in Form eines Planarmotors mit einem Stator, der eine Transportebene (Auflage) ausbildet, und an dem Elektromagnete angeordnet sind. Auf der Auflage können mehreren Transporteinheiten (Transportmover) zweidimensional bewegt werden. Es können Führungsleisten zum Führen der Mover vorgesehen sein, Die Führungsleisten dienen dazu, eine möglichst genaue Bahnführung bei der Bewegung des Movers zu ermöglichen. DE 10 2014 116232 A1 offenbart ein Planarmotor gemäß dem Oberbegriff des Anspruchs 1.

JP 6 526446 B2 offenbart ein Containertransportsystem in Form eines Planarmotors zum Transport von Containern. Am Container sind Permanentmagnete angeordnet und am Stator sind Spulen vorgesehen. Die Container können mittels einer speziellen Hebevorrichtung zwischen übereinanderliegenden Ebenen bewegt werden. Die Hebevorrichtung weis einen U-förmigen Befestigungstisch auf, an dem die Container befestigt werden können. Am Befestigungstisch sind Antriebsspulen angeordnet, die einen LLM-Stator zur Bewegung des Containers ausbilden. An den Außenseiten der vertikalen Schenkel sind Magnete in vertikaler Richtung übereinander vorgesehen, die mit Spulen der Seitenwände der Hebeeinrichtung zusammenwirken, um einen vertikalen LLM auszubilden, mit dem der Befestigungstisch inkl. Container gehoben werden kann.

Es ist eine Aufgabe der Erfindung, einen Planarmotor mit einer Führungsvorrichtung bereitzustellen, mit der die Grenzen der derzeit möglichen Bewegungsmuster von Shuttles auf einem Planarmotor überschritten werden können, ohne dass dabei ein undefinierter oder unkontrollierbarer Zustand eintritt.

Die Aufgabe wird gemäß der Erfindung nach Anspruch 1 und mit dem eingangs genannten Planarmotor dadurch gelöst, dass der Posenverlauf zumindest eine Pose umfasst, welche in Bezug auf die Statoren des Planarmotors eine betriebsgerecht nicht ansteuerbare Pose ist, und wobei die Führungsvorrichtung das Shuttle in der zumindest einen betriebsgerecht nicht ansteuerbaren Pose stützt und stabilisiert und dass der Posenverlauf passive, d.h. von den Statoren des Planarmotors nicht aktuierbare Bewegungsabschnitte, umfasst, welche vom Shuttle mithilfe kinetischer und/oder potentieller Energie durchfahrbar sind. Diese Führungsvorrichtung erlaubt es dem Shuttle, die Grenzen der betriebsgerecht ansteuerbaren Posen zu überwinden und die Shuttles sogar über an sich "unmögliche" Posen zu bewegen, ohne in einen unkontrollierbaren Zustand zu gelangen. Die Shuttles können durch Schwung oder durch die Schwerkraft über die nicht aktuierbaren Bewegungsabschnitte bewegt werden. Der Begriff "nicht aktuierbar" bedeutet in diesem Zusammenhang, dass der Planarmotor in diesen Abschnitten keinen ausreichenden Einfluss auf die Bewegung des Shuttles ausüben kann.

Als "Stator" wird im Zusammenhang mit der gegenständlichen Offenbarung insbesondere ein einzelnes Statorsegment bezeichnet. Mehrere dieser einzelnen Statorsegmente können zu einem Statorfeld zusammengesetzt werden, das eine einzelne ebene Oberfläche ausbildet. Auch solche Statorfelder aus mehreren einzelnen Statorsegmenten können im weiteren Sinne als ein einzelner Stator betrachtet werden. Der Begriff "Stator", so wie er hierin verwendet wird, ist nicht auf eine bestimmte Flächengröße oder Bauart beschränkt. Im Zusammenhang mit der gegenständlichen Offenbarung kann daher auch eine beliebige zusammengehörige Anordnung an gemeinsam regelbaren Statorelementen als Stator bezeichnet werden. Ein Stator kann somit entweder einem einzigen Bauteil entsprechen oder einer beliebig gewählten Gruppe an Bauteilen, die zu einer Baugruppe zusammengesetzt sind. Je nach Wahl der Systemgrenzen kann somit ein Planarmotor eine beliebige Anzahl an Statoren oder auch nur einige wenige Statoren oder nur einen einzigen Stator aufweisen.

Als "Pose" wird im Zusammenhang mit der gegenständlichen Offenbarung eine Raumposition des Shuttles in Bezug auf die Statoren des Planarmotors bezeichnet, wobei die erste Ableitung der Raumposition nach der Zeit (d.h. die Geschwindigkeit) und die zweite Ableitung der Raumposition nach der Zeit (also die Beschleunigung) jeweils in allen sechs Bewegungsfreiheitsgraden ebenfalls Eigenschaften der Pose sind.

Als "Posenverlauf" wird im Zusammenhang mit der gegenständlichen Offenbarung eine stetige Abfolge von Posen bezeichnet, die ein Shuttle während eines Bewegungsablaufs hintereinander einnimmt. Ein Posenverlauf kann dabei translatorische und rotatorische Bewegungsanteile aufweisen.

Als "betriebsgerecht ansteuerbare Pose" wird eine Pose des Shuttles bezeichnet, die mit dem Planarmotor unter gegebenen Betriebsbedingungen in stabiler Weise erreichbar ist. Im Gegensatz dazu werden alle anderen Posen im Zusammenhang mit der gegenständlichen Offenbarung als "betriebsgerecht nicht ansteuerbare Posen" bezeichnet.

Als "Betriebsbedingungen" werden dabei betriebliche Vorgaben bezeichnet, die beispielsweise einen sicheren und/oder effizienten Betrieb des Planarmotors definieren. Beispielsweise könnte eine Pose des Shuttles zwar mit dem Planarmotor an sich erreichbar sein, dies wäre jedoch nur mit einem übermäßigen Energieaufwand erzielbar (etwa zum Aufbauen oder Aufrechterhalten einer Schräglage). In dem Fall könnte die Pose als ineffizient und daher nicht Zulässig angesehen werden und daher als "betriebsgerecht nicht ansteuerbare Pose" zu behandeln sein.

Als "in stabiler Weise erreichbar" wird eine Pose dann bezeichnet, wenn der Planarmotor das Shuttle in die Pose bringen kann, ohne dass sich dabei für das Shuttle ein unkontrollierbarer Zustand einstellen kann. Der Zustand und die Position des Shuttles müssen in einer betriebsgerecht ansteuerbaren Pose auch jederzeit durch Messung bzw. Beobachtung hinreichend genau ermittelt werden können.

Eine betriebsgerecht nicht ansteuerbare Pose liegt dann vor, wenn zumindest eine der obigen Voraussetzungen hinsichtlich zumindest einer Raumrichtung nicht erfüllt ist.

In einer vorteilhaften Ausführungsform kann die Bewegbarkeit des Shuttles entlang des Posenverlaufs von dem ersten Ende zu dem zweiten Ende durch die Statoren des Planarmotors sicherstellbar sein. Dies kann beispielsweise dadurch sichergestellt werden, dass das Shuttle im ersten Abschnitt des Posenverlaufs (oder davor) von den Statoren des Planarmotors soweit beschleunigt wird, dass das Shuttle den weiteren Posenverlauf alleine aufgrund der kinetischen Energie ohne Einwirkung eines Stators fortsetzen kann.

In vorteilhafter Weise kann die zumindest eine betriebsgerecht nicht ansteuerbare Pose eine Abweichung des Gierwinkels und/oder des Nickwinkels und/oder des Rollwinkels und/oder der Hubhöhe von einer betriebsgerecht ansteuerbaren Pose aufweisen. Dadurch lassen sich mit der Führungsvorrichtung komplexe Bewegungen realisieren, die an unterschiedliche Bedürfnisse angepasst werden können.

In einer vorteilhaften Ausführungsform kann der Posenverlauf der Führungsvorrichtung im Wesentlichen parallel zu einer Transportebene des Planarmotors verlaufen. Dadurch kann es weiterhin möglich sein, die Bewegung des Shuttles durch die von den Statoren des Planarmotors aufgebauten Magnetfelder zu steuern, während sich das Shuttle selbst in einer an sich nicht mehr regelbaren Pose befindet. Beispielsweise kann das Shuttle um die Hochachse in einen eigentlich unzulässigen Bereich verdreht werden oder das Shuttle kann über die maximal zulässige Hubhöhe in einen Bereich angehoben werden, der zwar ohne Stützung durch die Führungsvorrichtung vom Planarmotor an sich nicht erreichbar wäre, der jedoch nahe genug an der Transportebene liegt, um weiterhin eine ausreichende Vortriebskraft auf das Shuttle aufzubringen.

In vorteilhafter Weise kann die Führungsvorrichtung für das Shuttle einen Posenverlauf in einer oder beiden Richtungen von einer ersten Transportebene zu einer zweiten Transportebene des Planarmotors definieren, wodurch ein schnelles Übersetzen eines Shuttles zwischen einer ersten Statoranordnung des Shuttles, die an einer ersten Transportebene angeordnet ist, und einer zweiten Statoranordnung, die an einer zweiten Transportebene angeordnet ist, erlaubt.

In einer vorteilhaften Ausführungsform kann die erste Transportebene parallel zur zweiten Transportebene angeordnet sein. Dadurch kann beispielsweise ein Übergang für Shuttles zwischen Transportebenen unterschiedlicher Niveaus vorgesehen werden.

In einer weiteren vorteilhaften Ausführungsform können die erste Transportebene und die zweite Transportebene einen Winkel, insbesondere einen rechten Winkel, einschließen. Dadurch wird beispielsweise ein Transport von Shuttles zwischen ebenen und vertikalen Planarmotorabschnitten, die bislang üblicherweise nur mittels Robotern oder händisch realisierbar waren, auf einfache Weise alleine durch eine entsprechende Regelung der Statoren des Planarmotors möglich.

In vorteilhafter Weise kann die Führungsvorrichtung zwischen dem ersten Ende und dem zweiten Ende eine Brücke und/oder Unterführung für das Shuttle ausbilden. Beispielsweise bei Kreuzungspunkten kann dadurch auf einfache Weise und ohne komplexe Berechnungen eine Kollision von Shuttles mit sich kreuzenden Posenverläufen sicher vermieden werden, ohne dass irgendein Shuttle dabei abbremsen müsste.

In einer vorteilhaften Ausführungsform kann die Führungsvorrichtung eine mechanische Führung und/oder eine magnetische Führung und/oder eine elektromagnetische Führung und/oder eine pneumatische Führung aufweisen. Dadurch lassen sich jeweils auf den spezifischen Anwendungsfall optimierte Eigenschaften, wie etwa geringe Gleitreibung, stabile und exakte Führung und/oder hohe Geschwindigkeiten realisieren.

Gemäß einer weiteren vorteilhaften Ausführungsform kann zumindest eine nicht betriebsgerecht ansteuerbare Pose eine Vorgabe für einen sicheren und/oder effizienten Betrieb des Planarmotors verletzen, und/oder es kann zumindest eine nicht betriebsgerecht ansteuerbare Pose eine Vorgabe für eine erforderliche Stabilität des Shuttles nicht erfüllen, und/oder es kann zumindest eine nicht betriebsgerecht ansteuerbare Pose als solche mit den Statoren des Planarmotors nicht einstellbar sein. Im ersten Fall erhöht die Führungsvorrichtung die Effizienz des Planarmotors und verringert den Energiebedarf. Im zweiten Fall erhöht die Führungsvorrichtung die Sicherheit des Planarmotors und erlaubt das Einstellen von Posen, die aus Gründen der Sicherheit an sich nicht eingestellt werden dürften. Im Dritten Fall erweitert die Führungsvorrichtung den möglichen Bewegungsraum des Shuttles über den vom Planarmotor ansteuerbaren Bereich hinaus.

In vorteilhafter Weise kann die Position des Shuttles hinsichtlich zumindest eines Freiheitsgrades im gesamten Posenverlauf über eine Sensorik des Planarmotors zumindest schätzbar und vorzugsweise messbar sein. Auch wenn die Effizienz und/oder die Stabilität und/oder Ansteuerbarkeit des Shuttles vorübergehend nicht gewährleistet ist, kann es doch möglich sein, die Position mithilfe der in dem Planarmotor enthaltenen Sensorik entweder hinreichend genau zu messen oder in gewissen Abschnitten des Posenverlaufs zumindest mit einer für den Zweck hinreichenden Genauigkeit zu schätzen. Gegebenenfalls kann die Messung bzw. Schätzung der Position auf einen oder mehrere Freiheitsgrade eingeschränkt sein, die von besonderem Interesse sind.

Gemäß einer vorteilhaften Ausführungsform kann an der Führungsvorrichtung zumindest eine Bearbeitungsstation angeordnet sein. Dadurch lässt sich die Pose der von den Shuttles transportierten Objekte, die in der Bearbeitungsstation bearbeitet werden sollen, beliebig an die Bearbeitungsstation anpassen.

In vorteilhafter Weise kann der Planarmotor zumindest einen ersten Stator aufweisen, der in einer ersten Transportebene angeordnet ist, und zumindest einen zweiten Stator aufweisen, der in einer zweiten Transportebene angeordnet ist, wobei zumindest eine Führungsvorrichtung für das Shuttle einen Posenverlauf in einer oder beiden Richtungen von der ersten Transportebene zu der zweiten Transportebene definiert. Dadurch lassen sich hochflexible Bewegungsmuster für die vom Planarmotor transportierten Shuttles erzielen.

In einem weiteren Aspekt betrifft die gegenständliche Erfindung ein Verfahren gemäß Anspruch 13 zum Transportieren eines Shuttles mit einem hierin beschriebenen Planarmotor, wobei das Verfahren die folgenden Schritte aufweist: schwebend Anordnen des Shuttles mit einem ersten Stator in einer Einleitpose der Führungsvorrichtung, Bewegen und gegebenenfalls Beschleunigen des Shuttles mit zumindest dem ersten Stator in Richtung des Posenverlaufs der Führungsvorrichtung, Weiterbewegen des Shuttles über zumindest eine Shuttleposition, welche in Bezug auf die Statoren des Planarmotors eine betriebsgerecht nicht ansteuerbare Pose ist, bis das Shuttle die Ausleitpose erreicht, wobei die Führungsvorrichtung das Shuttle in der zumindest einen betriebsgerecht nicht ansteuerbaren Pose stützt und stabilisiert.

In vorteilhafter Weise kann das Weiterbewegen unter Ausnutzung von Magnetfeldern erfolgen, die von Statoren des Planarmotors aufgebaut werden. Dies ist insbesondere dann vorteilhaft, wenn das Shuttle zwar seine Regelbarkeit in Bezug auf eine oder mehrere Nebenrichtungen verloren hat, aber in zumindest einer der Hauptrichtungen oder verbliebenen Nebenrichtungen noch durch das Magnetfeld der Statoren regelbar ist. Alternativ oder zusätzlich kann das Weiterbewegen in vorteilhafter Weise unter Ausnutzung einer kinetischen Energie des Shuttles erfolgen. Damit lassen sich mit dem Shuttle auch Abschnitte überwinden, in denen die Regelbarkeit im Wesentlichen vollständig verloren gegangen ist.

Alternativ oder zusätzlich kann das Weiterbewegen unter Ausnutzung einer potentiellen Energie des Shuttles erfolgen, wodurch vom Shuttle gegebenenfalls auch sehr lange Strecken überwunden werden können, wenn diese eine Verminderung der potentiellen Energie bedingen.

In einer weiteren alternativen ausführungsform kann das Weiterbewegen durch Anschieben und/oder Anziehen mit zumindest einem weiteren Shuttle erfolgen. Dadurch können beispielsweise Führungsvorrichtungen in der Art eines First-In-First-Out-Prinzips genutzt werden.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 eine schematische Darstellung eines Planarmotors mit einem daran angeordneten Shuttle,
Fig. 2 eine schematische Darstellung eines Shuttles in einer Draufsicht,
Fig. 3 eine schematische Darstellung eines Shuttles in einer Seitenansicht,
Fig. 4 einen Planarmotor mit einer daran angeordneten Führungsvorrichtung in einer Draufsicht,
Fig. 5 einen Planarmotor mit einer daran angeordneten Führungsvorrichtung in zwei Rissen, wobei Statoren in zwei zueinander versetzen Ebenen angeordnet sind,
Fig. 6 einen ebenen Planarmotor mit einer daran angeordneten Führungsvorrichtung in zwei Rissen gemäß einer weiteren Ausführungsform,
Fig. 7 einen Planarmotor mit einer daran angeordneten Führungsvorrichtung in zwei Rissen, wobei Statoren in zwei aufeinander normalen Ebenen angeordnet sind,
Fig. 8 einen Planarmotor mit einer daran angeordneten Führungsvorrichtung in zwei Rissen, wobei Statoren in zwei geneigten Ebenen angeordnet sind,
Fig. 9 einen Planarmotor mit einer daran angeordneten Führungsvorrichtung gemäß einer weiteren Ausführungsform in einer Draufsicht und
Fig. 10 eine schaubildliche Darstellung eines Planarmotors mit einer daran angeordneten Führungsvorrichtung mit zwei im Wesentlichen normal aufeinander angeordneten Statoren.

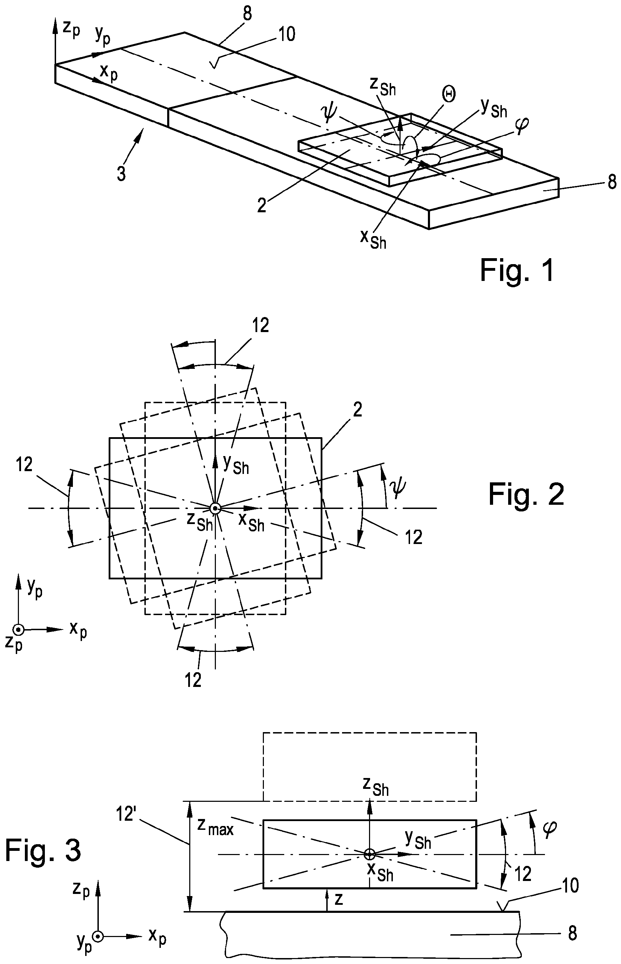

Fig. 1 zeigt eine schematische Darstellung eines Planarmotors 3 mit zwei aneinander angrenzenden Statoren 8 die eine Transportebene 10 definieren, wobei ein Shuttle 2 schwebend oberhalb der Transportebene 10 angeordnet ist. Gegebenenfalls kann auch die Gesamtheit der Statorelemente, die die Transportebene 10 ausbilden als ein einziger Stator angesehen werden. Für den Planarmotor 3 kann ein körperfest mit den Statoren verbundenes Koordinatensystem x_{P}, y_{P}, z_{P} definiert werden, wobei die Transportebene 10 beispielsweise in die Hauptebene x_{P}-y_{P} gelegt sein kann.

Mit Hilfe eines derartigen Planarmotors 3 können grundsätzlich hochpräzise Bewegungen des schwebenden Shuttles 2 in Richtung aller sechs Starrkörper-Freiheitsgrade durchgeführt werden. Durch den modularen Aufbau der Statoren 8 in einer Segmentanordnung sind translatorische Bewegungen in zwei Hauptbewegungsrichtungen quasi uneingeschränkt möglich, zudem sind in der Regel eingeschränkte Bewegungen in den vier verbleibenden Nebenbewegungsrichtungen (1x Translation sowie 3x Rotation) ebenfalls möglich. Die erforderlichen Kräfte werden mittels (Elektro-)Magnetismus erzeugt. Mit manchen Planarmotoren ist auch eine im Wesentlichen uneingeschränkte Rotation um die z-Achse möglich.

Die Bewegungen des Shuttles können durch ein körperfest mit dem Shuttle verbundenes Koordinatensystem (x_{Sh}, y_{Sh}, z_{Sh}) beschrieben werden, beziehungsweise durch die Lage, Bewegung und Beschleunigung dieses Koordinatensystems gegenüber dem Koordinatensystem der Statoren. Die zwei Hauptbewegungsrichtungen x_{P} und y_{P}, sind im Wesentlichen parallel zur Transportebene 10 des Planarmotors 3 angeordnet. Der Bewegungsraum umfasst des Weiteren vier Nebenbewegungsrichtungen, nämlich eine Translation entlang der Nebenbewegungsrichtung z_{P} (heben und senken) und sämtliche drei Rotationen. Die Rotationen werden als Rollen ϕ um die x-Achse, Nicken θ um die y-Achse und Gieren ψ um die Hochachse z bezeichnet.

Die Bewegungen in den Nebenbewegungsrichtungen sind typischerweise physikalisch bzw. konstruktionsbedingt beschränkt. So ist etwa die Nebenbewegungsrichtung entlang der Hochachse z_{P} aufgrund der mit der Hubhöhe exponentiell abfallenden magnetischen Flussdichte beschränkt. Das Gieren um die Hochachse ist typischerweise (aber nicht notwendigerweise) aufgrund des Zusammenspiels zwischen den Statorspulen und den Magneteinheiten am Shuttle, beschränkt. Ab einem gewissen Gierwinkel ψ kann der Planarmotor unter anderem die Regelbarkeit der Rotation um die Hochachse verlieren. Die verbleibenden zwei Rotationen sind im Wesentlichen aufgrund des für die Rotation notwendigen Platzbedarfs beschränkt, sprich wiederum Aufgrund der notwendigen Hubbewegung sowie dem Verlust der Regelbarkeit (aufgrund der Beschränkung der maximalen Kräfte/Momente) und der Beobachtbarkeit. Bei Anwendungen, welche das Shuttle aus diesem beschränkten Bereich führen, kann beispielsweise auf externe Manipulatoren (z.B. Roboter) zurückgegriffen werden, was jedoch mit einem erheblichen technischen Aufwand verbunden ist.

In Fig. 2 und 3 sind die vom Shuttle 2 ausführbaren Bewegungen schematisch dargestellt. Fig. 2 zeigt ein Shuttle 2 in einer Draufsicht. Das Shuttle 2 kann beispielsweise in Bezug auf den Stator (dessen Position durch das Koordinatensystem x_{P}, y_{P}, z_{P} dargestellt ist) in einer ersten Hauptlage angeordnet sein, wobei die erste Hauptachse x_{Sh} parallel zur entsprechenden ersten Hauptachse x_{P} des Stators angeordnet ist, oder in einer zweiten Hauptlage, wobei die erste Hauptachse x_{Sh} parallel zur entsprechenden zweiten Hauptachse y_{P} des Stators angeordnet ist. Durch eine entsprechende Ansteuerung der Statoren ist es möglich, das Shuttle 2 entlang der Hauptachsen x_{P}, y_{P} zu bewegen. Weiters ist es möglich, das Shuttle 2 ausgehend von diesen Hauptlagen um die Hochachse z_{P} in positiver oder negativer Richtung zu schwenken (Gieren ψ). Diese Bewegung ist jedoch konstruktionsbedingt typischerweise nur eingeschränkt möglich, da das Shuttle 2 bei einer zu großen Abweichung die Regelbarkeit verliert, d.h. vom Stator nicht mehr steuerbar oder zumindest nicht mehr vollständig steuerbar ist, oder nicht mehr beobachtbar ist. Somit lässt sich in Bezug auf das Stator-Koordinatensystem ein Bereich an betriebsgerecht ansteuerbaren Posen 12 definieren.

Fig. 3 zeigt ein Shuttle 2 in einer schematisierten Darstellung in einer Seitenansicht, wobei das Shuttle 2 mit einem Abstand z schwebend über der Transportebene 10 angeordnet ist. Auch hierbei gibt es für das Rollen ϕ um die erste Hauptachse x_{P} einen Bereich, der betriebsgerecht ansteuerbare Posen 12 definiert. (Auf analoge Weise kann ein solcher Bereich für das Nicken θ um die zweite Hauptachse y_{P} angegeben werden). Auch der Abstand z zur Transportebene 10 kann bis zu einer maximalen Hubhöhe zₘₐₓ variiert werden, wobei auch dies einen Bereich mit betriebsgerecht ansteuerbaren Posen 12' definiert.

Da Shuttles in Posen, die sich außerhalb der betriebsgerecht ansteuerbaren Posen 12 befinden, keine bzw. nur eine schlechte Regelbarkeit aufweisen bzw. keine betriebsgerechte Betätigung möglich ist, ist es mit herkömmlichen Planarmotoren 3 nicht möglich, ein Shuttle über den Bereich der betriebsgerecht ansteuerbaren Pose 12 hinaus zu bewegen. Für zahlreiche Anwendungen wäre es jedoch wünschenswert, diese technische Einschränkung zu überwinden.

Gemäß der gegenständlichen Offenbarung wird daher eine Führungsvorrichtung 1 vorgeschlagen, die es den Shuttles 2 erlaubt, auch Posen außerhalb der betriebsgerecht ansteuerbaren Pose 12 zu nutzen. Dabei wird das Shuttle durch die Führungsvorrichtung 1 derart zwangsgeführt, dass mit der verbleibenden elektromagnetischen, kinetischen oder potentiellen Kraftwirkung auf das Shuttle eine weitere Bewegung möglich ist. Dadurch kann der zulässige Bewegungsbereich in den Nebenbewegungsrichtungen vergrößert werden. Im Extremfall, wenn die Regelbarkeit in Vortriebsrichtung vollständig verloren geht, sprich keine adäquate elektromagnetische Kraftwirkung in diese Richtung mehr möglich ist, kann die kinetische oder potentielle Energie des Shuttles zur Überwindung der Bewegungswiderstände im entsprechenden transienten nicht regelbaren Übergangsbereich ausgenützt werden. Für die abschnittsweise zusätzliche Führungsvorrichtung 1 der Shuttles können grundsätzlich alle technisch verfügbaren Verfahren, wie etwa kontaktbasierte und/oder berührungslose Führungen verwendet werden.

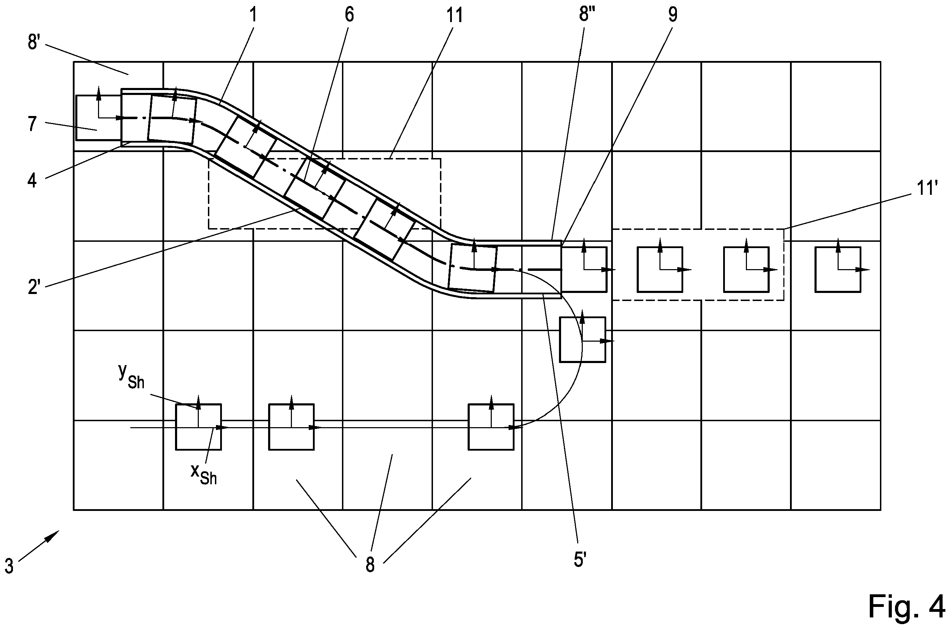

Fig. 4 zeigt einen Planarmotor 3 mit einer Vielzahl an Statoren 8, die in einer Transportebene angeordnet sind. Der Planarmotor 3 kann eine Vielzahl an Shuttles 2 gleichzeitig schwebend über den gesamten Bereich der Transportebene bewegen, beispielsweise um auf den Shuttles 2 angeordnete Objekte in Bearbeitungsstationen 11, 11' zu bearbeiten, die in Fig. 4 als rechteckige Bereiche schematisch dargestellt sind. Für die Bearbeitung in der ersten Bearbeitungsstation 11 ist es erforderlich (oder vorteilhaft), das Shuttle unter einem Winkel anzuordnen, der sich von der "Normallage" so stark unterscheidet, dass sie nicht betriebsgerecht ansteuerbar sind. Würde man daher versuchen, diese Pose des Shuttles 2 (die Pose ist in Fig. 4 mit dem Bezugszeichen 2' versehen) mit dem Planarmotor 3 einzustellen, käme das Shuttle in einen nicht zulässigen oder gar unkontrollierbaren Zustand. Um dennoch eine Bearbeitung in der ersten Bearbeitungsstation 11 zu ermöglichen, ist eine Führungsvorrichtung 1 vorgesehen, welche beispielsweise aus zwei parallelen Gleitschienen oder Rollenanordnungen besteht, zwischen denen das Shuttle 2' entlang eines Posenverlaufs 6 (in Fig. 4 als Strich-Punkt-Linie dargestellt) bewegbar ist, während es hinsichtlich seines Gierwinkels ψ stabil positioniert ist. Somit verhindert die Führungsvorrichtung 1 im Bereich der ersten Bearbeitungsstation, dass das darin geführte Shuttle 2' eine unkontrollierte Rotation um die Hochachse z_{P} vollzieht und auch die Bewegung parallel zur Transportebene ist auf eine Bewegung entlang des Posenverlaufs 6 eingeschränkt.

Um das Shuttle 2' in der Bearbeitungsstation 11 zu bearbeiten wird dieses von den Statoren 8 in eine Einleitpose 7 bewegt, die sich an dem mit dem Bezugszeichen 8' gekennzeichneten Stator befindet. Aus der Einleitpose 7 kann das Shuttle 2' bei einem ersten Ende 4 der Führungsvorrichtung 1 entlang des Posenverlaufs 6 in die Führungsvorrichtung 1 bewegt werden. Bei einer weiteren Bewegung des von der Führungsvorrichtung 1 geführten Shuttles 2` entlang des Posenverlaufs 6 wird das Shuttle 2' um die Hochachse aus einer Pose der vollständigen Regelbarkeit heraus verdreht. Auch wenn die Statoren 8 eigentlich nicht dazu fähig sind, ein Shuttle von sich aus in solch eine verdrehte Pose zu bewegen, ist es doch möglich, das von der Führungsvorrichtung 1 zwangsgeführte Shuttle 2' mit den Statoren 8 weiterhin entlang des Posenverlaufs 6 zu bewegen oder auch in seiner jeweiligen Position stabil zu halten. Die Bearbeitung in der Bearbeitungsstation 11 kann dabei entweder bei stillstehenden Shuttle 2' erfolgen, oder während das Shuttle 2' in einer auf die Bearbeitung abgestimmten Geschwindigkeit und gegebenenfalls Beschleunigung entlang des Posenverlaufs 6 bewegt wird.

Durch die Einschränkung der Freiheitsgrade des Shuttles 2' mit der Führungsvorrichtung ist es somit nun möglich, das Shuttle 2' mithilfe der Magnetfelder der Statoren 8 stabil entlang des Posenverlaufs 6 zu bewegen, obwohl sich der Gierwinkel ψ eigentlich außerhalb einer betriebsgerecht ansteuerbaren Pose befindet.

Vor dem zweiten Ende 5 der Führungsvorrichtung 1 wird das Shuttle 2' durch die Führungsvorrichtung 1 wieder in eine betriebsgerecht ansteuerbare Pose geschwenkt und verlässt in einer Ausleitpose 9 das zweite Ende 5 der Führungsbahn 1, wobei der Stator, an dem sich die Ausleitpose 9 befindet mit dem Bezugszeichen 8" gekennzeichnet ist.

In alternativen Ausführungsformen ist es auch möglich, dass ein Shuttle 2 vollständig (d.h. für alle (oder im Wesentlichen alle) translatorischen und rotatorischen Bewegungsrichtungen die Regelbarkeit verliert, während es von der Führungsvorrichtung 1 zwangsgeführt ist. In dem Fall kann die weitere Bewegung des Shuttles entlang des Posenverlaufs 6 entweder unter Ausnutzung der potentiellen Energie oder unter Ausnutzung der kinetischen Energie des Shuttles sichergestellt werden.

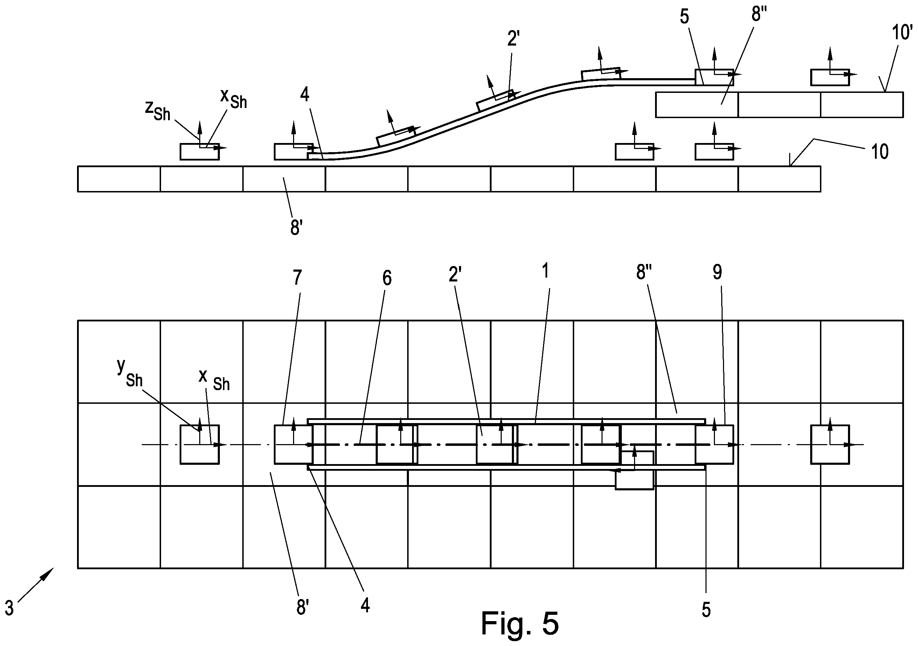

In Fig. 5 ist eine solche Ausführung beispielhaft dargestellt. Der Planarmotor 3, der in Fig. 5 in zwei Rissen dargestellt ist, weist in dem Fall Statoren auf, die in zwei unterschiedlichen Transportebenen 10, 10' angeordnet sind. Die beiden Transportebenen 10, 10' sind parallel zueinander versetzt angeordnet, wobei die Transportebenen 10, 10' beispielsweise horizontal (übereinander) angeordnet sein können, aber auch beliebig vertikal oder schräg, soweit dies mit der verwendeten Kombination aus Statoren 8 und Shuttles 2 technisch möglich ist.

Zwischen den beiden Transportebenen ist eine Führungsvorrichtung 1 angeordnet, wobei ein daran angeordnetes Shuttle 2' in einer Bewegung entlang einem Posenverlauf 6 zwangsführt ist. Die Führungsvorrichtung 1 kann beispielsweise als mechanische Führung, etwa eine Gleitführung oder Rollenbahn, oder als (elektro)magnetische oder pneumatische Führung ausgeführt sein und ermöglicht, ein Shuttle 2 von der ersten Transportebene 10 in die zweite Transportebene 10` zu bewegen, oder auch umgekehrt. Dazu wird das Shuttle wiederum zuerst in eine Einleitpose 7 bewegt, die in Bezug auf ein erstes Ende 4 der Führungsvorrichtung 1 definiert ist. Aus der Einleitpose 7 wird das Shuttle von den Statoren 8 in Richtung des Posenverlaufs 6 bewegt, wobei es entweder aus der Einleitpose 7 beschleunigt wird, oder bereits mit einer entsprechenden Geschwindigkeit in die Einleitpose 7 bewegt wurde.

Bei einer weiteren Bewegung entlang des Posenverlaufs 6 wird das Shuttle 2 einerseits in Richtung der Hochachse z_{P} von der ersten Transportebene angehoben, andererseits wird das Shuttle um die zweite Hauptachse geschwenkt. In der mit dem Bezugszeichen 2' dargestellten Pose hat nun das Shuttle 2` die Posen einer vollständigen Regelbarkeit verlassen, da es zu weit von den Statoren 8 der ersten Transportebene 10 entfernt ist, sodass die von diesen Statoren 8 erzeugten Magnetfelder keine ausreichende Wirkung auf das Shuttle 2' mehr entfalten können oder dessen Position/Zustand nicht mehr erfasst werden kann. Da das Shuttle 2' in dieser Pose somit nicht mehr von den Statoren 8 beeinflussbar ist, muss über die Regelung sichergestellt werden, dass beim Erreichen einer betriebsgerecht nicht ansteuerbaren Pose eine ausreichende Geschwindigkeit erreicht wird, sodass das Shuttle 2' mit dem vorhandenen Schwung (initale kinetische Energie) und gegebenenfalls mithilfe der Schwerkraft (potentielle Energie) am zweiten Ende 5 der Führungsvorrichtung 1 wieder eine betriebsgerecht ansteuerbare Pose erreicht, ohne in der Führungsvorrichtung 1 steckenzubleiben oder sich aufgrund der Schwerkraft in eine falsche Richtung zu bewegen. Das Shuttle wird hierbei durch dissipative Kräfte, beispielsweise Reibung, Luftwiderstand, Wirbelstromverluste, gebremst indem sie dem Shuttle die initiale kinetische Energie entziehen. Die initiale kinetische Energie hängt im Wesentlichen von der Anfangsgeschwindigkeit und dem Gewicht des Shuttles ab. Die potentielle Energie hängt im Wesentlichen von der Anordnung des Planarmotors sowie der Richtung, in die die Erdbeschleunigung wirkt, ab.

Ein in der Führungsvorrichtung 1 steckengebliebenes, nicht-regelbares (stehendes) Shuttle kann gegebenenfalls mit Hilfe eines anderen Shuttles aus der Führung "geschoben" oder "gezogen" werden.

Am zweiten Ende 5 der Führungsvorrichtung 1 gelangt das Shuttle 2 wieder in den Einflussbereich des Stators 8" der zweiten Transportebene 10', wobei es sich in der Ausleitpose 9 wiederum in einer betriebsgerecht ansteuerbaren Pose befindet. Mit demselben Prinzip kann auch eine Bewegung eines Shuttles 2 in der umgekehrten Richtung, d.h. von dem zweiten Ende 5 zum ersten Ende 4 realisiert werden, wobei sich die Verhältnisse lediglich hinsichtlich der Schwerkraft unterscheiden.

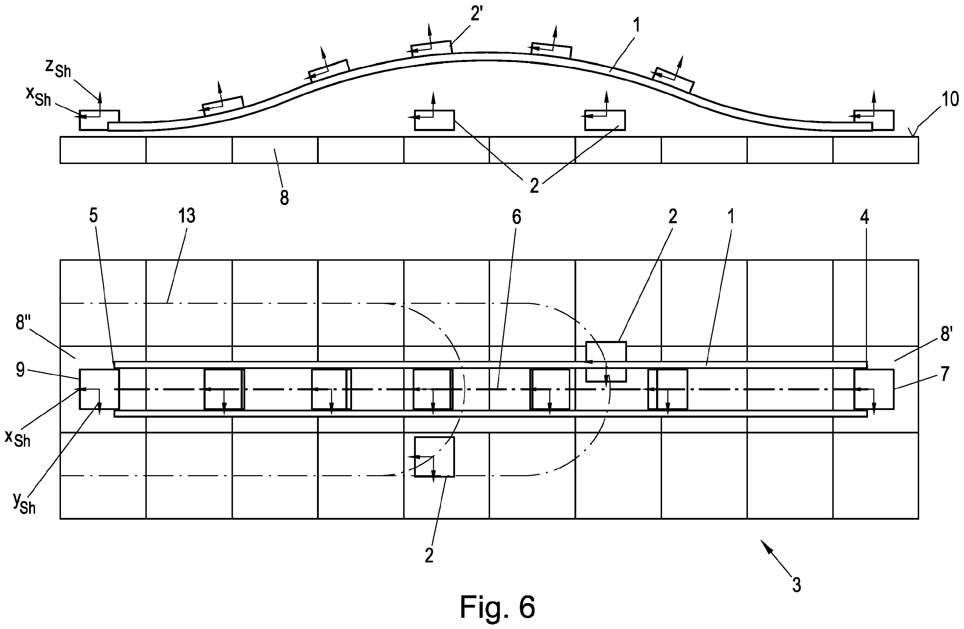

Fig. 6 zeigt eine weitere Ausführungsform eines Planarmotors 3 mit einer Führungsvorrichtung 1, die die Funktion einer "Brücke" hat. Die Statoren 8 des Planarmotors 3 sind in einer einzigen Transportebene 10 angeordnet, wobei die beiden an der Transportebene 10 dargestellten Shuttles 2 sich entlang mehrerer Bahnkurven 13 bewegen, die beispielsweise prozessbedingt vorgegeben sein können. Ein Queren solcher Bahnkurven 13 durch ein anderes Shuttle 2 ist zwar an sich ohne weiteres möglich, es muss jedoch zeitlich auf die Shuttles 2 abgestimmt werden, die sich auf den Bahnkurven 13 bewegen. Besonders bei stark frequentierten Strecken kann dies problematisch sein und unter Umständen "Staus" vor Kreuzungsstellen verursachen. Anstelle der Brücke kann in analoger Weise auch eine "Unterführung" realisiert werden, wobei die Führungsvorrichtung 1 das Shuttle 2 durch eine Öffnung in der Transportebene 10 nach unten leitet und an einem gegenüberliegenden Ende durch eine weitere Öffnung wieder nach oben führt.

Mit der in Fig. 6 dargestellten Führungsvorrichtung 1 kann ein Shuttle 2` von einer Einleitpose 7 an einem ersten Ende 4 der Führungsvorrichtung 1 (Stator 8') mit zu einer Ausleitpose 9 an einem zweiten Ende 5 der Führungsvorrichtung 1 (Stator 8") bewegt werden und dabei die Bahnkurven 13 queren, ohne den Transport auf den Bahnkurven 13 zu beeinträchtigen. Die Führungsvorrichtung 1 (bzw. der von dieser definierte Posenverlauf 6) verläuft dabei im Bereich des ersten Endes 4 zuerst parallel zur Transportebene 10, schwenkt im weiteren Verlauf nach oben (bezogen auf die Transportebene 10) und bildet eine Brücke über die darunterliegenden Statoren 8 aus, in denen die Bahnkurven 13 liegen. Die Brücke ist ausreichend hoch, um eine Beeinflussung der auf der Führungsvorrichtung 1 gleitenden Shuttles 2' durch die Magnetfelder der darunterliegenden Statoren 8, welche die Shuttles 2 in der Transportebene 10 entlang der Bahnkurven 13 transportieren, zu verhindern. Im weiteren Verlauf schwenkt die Führungsvorrichtung 1 bzw. der Posenverlauf 6 wieder nach unten und nähert sich wieder der Transportebene 10 an, wobei die auf der Führungsvorrichtung 1 gleitenden Shuttles 2` wieder in eine betriebsgerecht ansteuerbare Pose gelangen und von den Statoren 8 bis zum zweiten Ende 5 der Führungsvorrichtung 1 weiterbewegt werden können. Der von der Führungsvorrichtung 1 definierte Posenverlauf 6 verläuft im Bereich des zweiten Endes 5, bzw. der Ausleitpose 9 wiederum parallel zur Transportebene, sodass ein ungestörter Übergang des Shuttles 2' von dem geführten Transport in den normalen Transport durch die Statoren (bei dem Stator 8") gewährleistet ist.

Die in Fig. 6 dargestellte brückenartig ausgebildete Führungsvorrichtung 1 kann nicht nur mit Planarmotoren 3 verwendet werden, deren Transportebene 10 horizontal angeordnet ist, sondern auch bei einer vertikalen oder schräg geneigten Transportebene 10, wobei gegebenenfalls die Schwerkraft, die auf das Shuttle 2` wirkt, berücksichtigt werden muss. Die in Fig. 6 dargestellte Führungsvorrichtung 1 kann auch verwendet werden, um andere Hindernisse zu überbrücken, beispielsweise um Shuttles 2' über Bereiche zu transportieren, in denen keine Statoren 8 angeordnet sind. Gegebenenfalls kann die Führungsvorrichtung 1 auch einen in einer anderen Richtung gekrümmten Verlauf aufweisen, etwa um Kurven auszubilden, oder es kann ein Verschwenken der Shuttles 2` beim Durchlaufen der Führungsvorrichtung 1 implementiert sein.

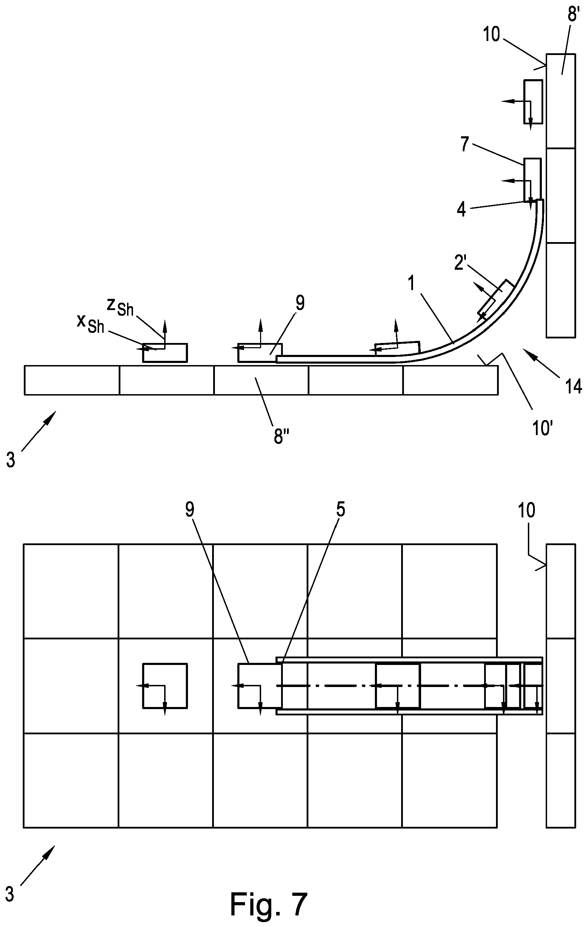

Fig. 7 zeigt eine weitere beispielhafte Ausführungsform eines Planarmotors 3 mit einer Führungsvorrichtung 1, die angeordnet ist, um ein Shuttle 2` von einer ersten Transportebene 10 in eine zweite Transportebene 10', die im Wesentlichen unter einem rechten Winkel auf die erste Transportebene 10 angeordnet ist, überzuführen (oder umgekehrt). Dazu ist es erforderlich, dass das Shuttle 2' einen Zwischenbereich 14 überbrückt, in dem seine Pose weder in Bezug auf irgendeinen Stator 8 der ersten Transportebene 10, noch in Bezug auf einen Stator 8 der zweiten Transportebene 10` einer betriebsgerecht ansteuerbaren Pose entspricht. Der Wechsel von einer Transportebene 10 zur anderen Transportebene 10` über die Führungsvorrichtung 1 entspricht im Wesentlichen der Vorgehensweise, die bereits in Zusammenhang mit der Beschreibung der anderen Figuren ausführlich offenbart wurde. Auch die in Fig. 7 dargestellte Führungsvorrichtung 1 kann in beiden Richtungen verwendet werden, wobei in Abhängigkeit der Ausrichtung des Planarmotors 3 die auf das Shuttle 2' wirkende Schwerkraft entsprechend zu berücksichtigen ist.

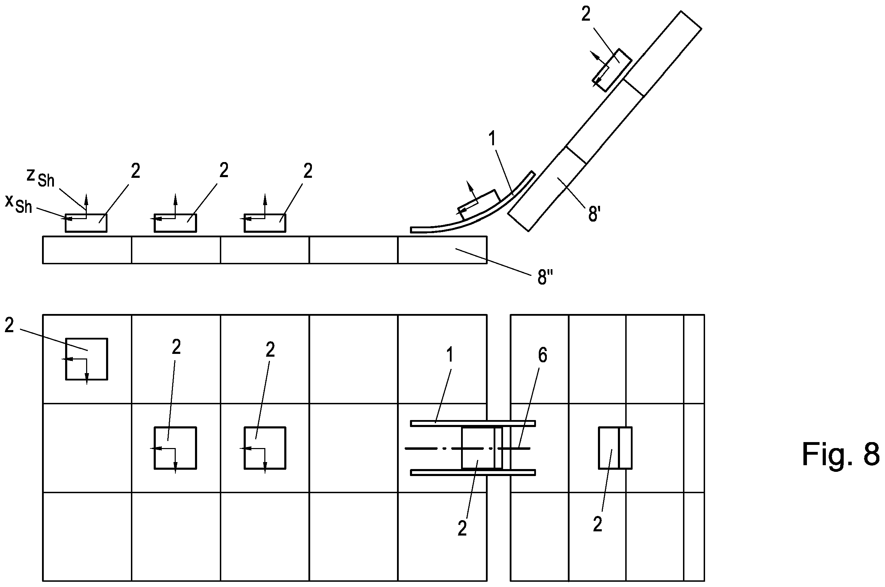

In einer weiteren Ausführungsform kann die Führungsvorrichtung 1 auch für einen Wechsel zwischen Transportebenen 10, 10' vorgesehen sein, die einen Winkel einschließen, der vom rechten Winkel abweicht. Fig. 8 zeigt eine solche Ausführungsform mit einem flachen Winkel, wobei die Funktionsweise wiederum analog zu den zuvor beschriebenen ist.

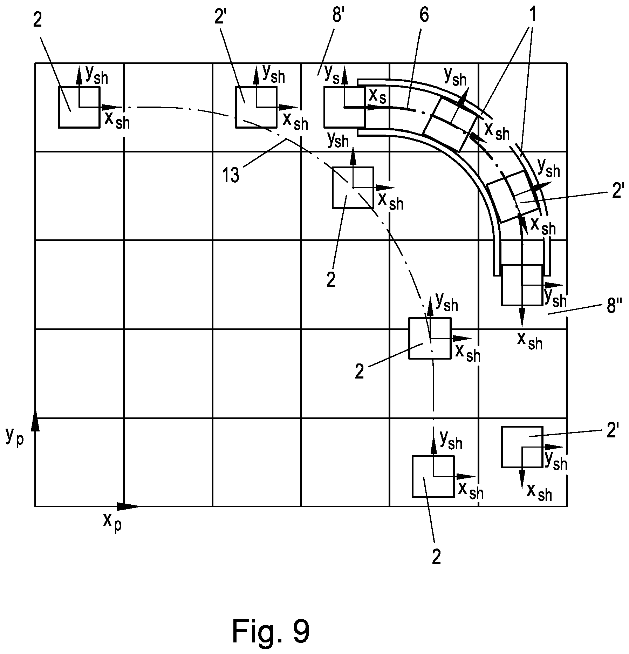

Fig. 9 zeigt eine weitere Ausführungsform, die im Zusammenhang mit einem Planarmotor verwendet werden kann, der eine einzige Transportebene 10 umfasst. Dabei sind mehrere Shuttles 2 dargestellt, die sich entlang einer gekrümmten Bahnkurve 13 bewegen. Aufgrund der eingeschränkten Schwenkbarkeit der Shuttles 2 um ihre Hochachse erfolgt die Bewegung dabei ohne Rotation, das heißt die Hauptachsen x_{Sh} und y_{Sh} des Shuttles 2 bleiben in jeder Position im Wesentlichen parallel zu den entsprechenden Hauptachsen x_{P} bzw. y_{P} der Statoren 8. In vielen Fällen kann es aber gewünscht sein, dass bestimmte Shuttles 2` beim Durchlaufen der Kurve "mitgeschwenkt" werden. Im gegenständlichen Fall, bei dem die Bahnkurve 13 einen Schwenk um 90° vollzieht entspricht dies einer Rotation des Shuttles 2` um ebenfalls 90°. Die in Fig. 9 dargestellte Führungsvorrichtung 1 dient genau diesem Zweck und zwingt das Shuttle 2' beim Durchlaufen der Führungsvorrichtung 1 entlang des Posenverlaufs 6 neben der Richtungsänderung auch zu einer 90°-Rotation um die Hochachse.

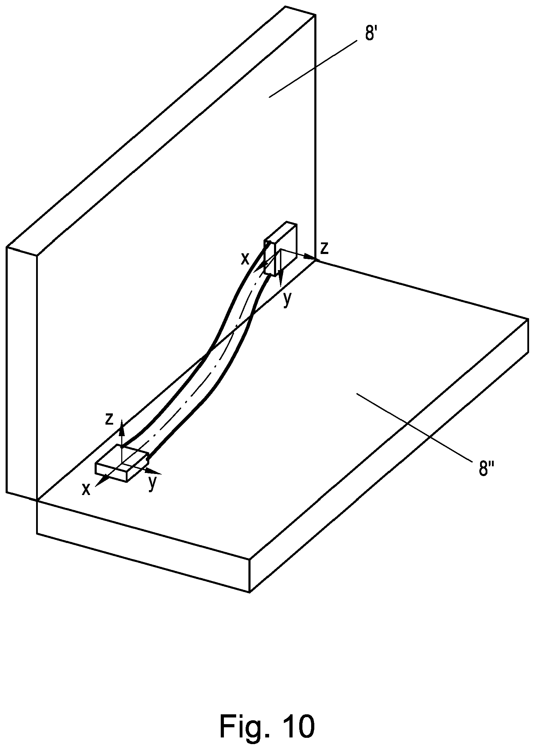

Gegebenenfalls kann eine Führungsvorrichtung 1 auch vorgesehen sein, um ein Rollen um die erste Hauptachse x_{Sh} zu verwirklichen. Fig. 10 zeigt eine entsprechende Ausführungsform. Dabei wird, ähnlich wie bei den Figuren 7 und 8, ein Übergang eines Shuttles 2' von einer ersten Transportebene 10 zu einer zweiten Transportebene 10` realisiert, wobei die zweite Transportebene 10' zur ersten Transportebene 10 einen Winkel einschließt. In Fig. 10 wird von der Führungsvorrichtung 1 das Shuttle 2' entlang eines Posenverlaufs 6 bewegt, wobei das Shuttle 2' gleichzeitig um 90° gerollt wird. Gegebenenfalls können auf analoge Weise Rollbewegungen um andere Winkel ausgeführt werden.

Die zuvor offenbarten Beispiele können unter anderem die folgenden Merkmale aufweisen, wobei alle offenbarten Merkmale beliebig miteinander kombinierbar sind, sofern dem keine technischen Hürden entgegenstehen. Ein Shuttle schwebt, von Statoren 8 vollständig regelbar gesteuert, zu dem ersten Ende 4 der Führungsvorrichtung 1, wobei die Ausrichtung des Shuttles 2 an den Führungseinlauf angepasst wird, sodass sie der Einleitpose 7 entspricht. Das Shuttle bewegt sich (schwebend) in die Führungsvorrichtung und beschleunigt gegebenenfalls so weit, wie dies im gegenständlichen Fall möglich, nötig und/oder entsprechend der Anwendung zulässig ist. Dadurch erhöht sich die kinetische Energie des Shuttles. Falls bei der nachfolgenden (durch die Führungsvorrichtung 1 zwangsgeführten) Bewegung des Shuttles 2 entlang des Posenverlaufs die potentielle Energie erhöht wird und/oder die elektromagnetische Kraftwirkung in Vortriebsrichtung vollständig verloren geht und/oder dissipative Kräfte (Reibung, Luftwiderstand, Wirbelstromverluste, etc.) auf das Shuttle wirken, kann die kinetische Energie diese Verluste ausgleichen. In der Phase vor dem Verlieren der vollständigen Regelbarkeit kann die Führungsvorrichtung dem Shuttle bereits die entsprechenden Freiheitsgrade entziehen, obwohl das Shuttle noch vollständig regelbar ist. Die infolge der Zwangsführung "frei gewordenen" magnetischen Kräfte können indirekt für andere Zwecke (z. B. Vortrieb und/oder Beschleunigung) verwendet werden. Mit fortschreitender Bewegung entlang des Posenverlaufs 6 nimmt dann die Regelbarkeit ab, bzw. kann sie in einzelnen, gegebenenfalls auch in allen Richtungen vollständig verloren gehen und die Führungsvorrichtung übernimmt dabei einen Teil der entsprechenden Kräfte.

Im Extremfall verliert das Shuttle dabei auch zweitweise die Regelbarkeit in (zumindest einer) Bewegungsrichtung, sprich es ist keine adäquate elektromagnetische Kraftwirkung mehr möglich. Für die notwendige weitere Bewegung des Shuttles entlang des entsprechenden Freiheitsgrads (Überwindung der Bewegungswiderstände) können diese Bereiche mit der "gespeicherten" kinetischen Energie des Shuttles und/oder der gespeicherten potentiellen Energie überbrückt werden.

Nachdem die Regelbarkeit ihr Minimum erreicht hat nimmt diese im weiteren Verlauf der Bewegung des Shuttles entlang des Posenverlaufs wieder zu und das Shuttle erlangt vor dem Erreichen des zweiten Endes 5 der Führungsvorrichtung wieder seine vollständige Regelbarkeit. In diesem Bereich kann über die Statoren auch wieder eine Anpassung des Geschwindigkeitszustandes erfolgen falls dies während der vorangegangenen Bewegung aufgrund der schlechten bzw. fehlenden elektromagnetischen Kraftwirkungen nur bedingt möglich war. Beispielsweise kann das Shuttle abgebremst werden, falls dessen Geschwindigkeit infolge der Potentialenergie erhöht wurde.

Am zweiten Ende der Führungsvorrichtung verlässt das Shuttle die Führungsvorrichtung wiederum schwebend und in einer betriebsgerecht ansteuerbaren Pose.

In der Beschreibung und den Ansprüchen bedeutet die Ausdrücke "im Wesentlichen" oder "etwa", sofern nichts anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen. Die Angabe "11 %" bedeutet somit beispielsweise: "von 9,9 % bis 12,1 %". Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Die in den einzelnen Ausgestaltungen und Beispielen angegebenen einzelnen Merkmale und Varianten können (sofern nicht an Ort und Stelle etwas Anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

### Bezugszeichen:

Führungsvorrichtung 1
Shuttle 2
Planarmotor 3
erstes Ende 4
zweites Ende 5
Posenverlauf 6
Einleitpose 7
Stator 8
Ausleitpose 9
Transportebene 10
Bearbeitungsstationen 11
Bereich vollständiger Regelbarkeit 12
Bahnkurve 13
Zwischenbereich 14

## Patentansprüche

1. Planarmotor (3) mit zumindest einem ersten Stator (8`) und mit zumindest einem Shuttle (2), wobei eine Führungsvorrichtung (1) für das zumindest eine Shuttle (2) des Planarmotors (3) vorgesehen ist, wobei die Führungsvorrichtung (1) ein erstes Ende (4) und ein zweites Ende (5) aufweist und zwischen dem ersten Ende (4) und dem zweiten Ende (5) einen Posenverlauf (6) des Shuttles (2) definiert, wobei das erste Ende (4) eine Einleitpose (7) des Shuttles (2) definiert und wobei das erste Ende (4) am ersten Stator (8`) des Planarmotors (3) so angeordnet ist, dass die Einleitpose (7) einer betriebsgerecht ansteuerbaren Pose (12) in Bezug auf den ersten Stator (8`) entspricht, wobei das zweite Ende (5) eine Ausleitpose (9) des Shuttles (2) definiert, wobei das zweite Ende (5) an dem ersten Stator (8`) oder einem zweiten Stator (8") des Planarmotors (3) so angeordnet ist, dass die Ausleitpose (9) in Bezug auf den ersten Stator (8`) oder den zweiten Stator (8") einer betriebsgerecht ansteuerbaren Pose entspricht, **dadurch gekennzeichnet, dass** der Posenverlauf (6) zumindest eine Pose umfasst, welche in Bezug auf die Statoren (8`, 8") des Planarmotors (3) eine betriebsgerecht nicht ansteuerbare Pose ist, und wobei die Führungsvorrichtung (1) das Shuttle (2) in der zumindest einen betriebsgerecht nicht ansteuerbaren Pose stützt und stabilisiert und dass der Posenverlauf (6) passive, von den Statoren (8`, 8") des Planarmotors (3) nicht aktuierbare Bewegungsabschnitte, umfasst, welche vom Shuttle (2) mithilfe kinetischer und/oder potentieller Energie durchfahrbar sind.

2. Planarmotor (3) nach Anspruch 1, **dadurch gekennzeichnet, dass** die Bewegbarkeit des Shuttles (2) entlang des Posenverlaufs (6) von dem ersten Ende (4) zu dem zweiten Ende (5) durch die Statoren (8`, 8") des Planarmotors (3) sicherstellbar ist.

3. Planarmotor (3) nach Anspruch 1 oder 2, **dadurch gekennzeichnet, dass** die zumindest eine betriebsgerecht nicht ansteuerbare Pose eine Abweichung des Gierwinkels (ψ) und/oder des Nickwinkels (θ) und/oder des Rollwinkels (ϕ) und/oder der Hubhöhe (z) von einer betriebsgerecht ansteuerbaren Pose (12) aufweist.

4. Planarmotor (3) nach einem der Ansprüche 1 bis 3, **dadurch gekennzeichnet, dass** der Posenverlauf (6) der Führungsvorrichtung (1) im Wesentlichen parallel zu einer Transportebene (10) des Planarmotors verläuft.

5. Planarmotor (3) nach einem der Ansprüche 1 bis 4, **dadurch gekennzeichnet, dass** die Führungsvorrichtung (1) für das Shuttle (2) einen Posenverlauf (6) in einer oder beiden Richtungen von einer ersten Transportebene (10) zu einer zweiten Transportebene (10`) des Planarmotors (3) definiert.

6. Planarmotor (3) nach Anspruch 5, **dadurch gekennzeichnet, dass** die erste Transportebene (10) parallel zur zweiten Transportebene (10`) angeordnet ist.

7. Planarmotor (3) nach Anspruch 5, **dadurch gekennzeichnet, dass** die erste Transportebene (10) und die zweite Transportebene (10') einen Winkel, insbesondere einen rechten Winkel, einschließen.

8. Planarmotor (3) nach einem der Ansprüche 1 bis 7, **dadurch gekennzeichnet, dass** die Führungsvorrichtung (1) zwischen dem ersten Ende (4) und dem zweiten Ende (5) eine Brücke und/oder Unterführung für das Shuttle (2) ausbildet und/oder die Führungsvorrichtung (1) eine mechanische Führung und/oder eine magnetische Führung und/oder eine elektromagnetische Führung und/oder eine pneumatische Führung aufweist.

9. Planarmotor (3) nach einem der Ansprüche 1 bis 8, **dadurch gekennzeichnet, dass** zumindest eine betriebsgerecht nicht ansteuerbare Pose eine Vorgabe für einen sicheren und/oder effizienten Betrieb des Planarmotors (3) verletzt, und/oder dass zumindest eine betriebsgerecht nicht ansteuerbare Pose eine Vorgabe für eine erforderliche Stabilität des Shuttles (2) nicht erfüllt, und/oder dass zumindest eine betriebsgerecht nicht ansteuerbare Pose als solche mit den Statoren (8) des Planarmotors (3) nicht einstellbar ist.

10. Planarmotor (3) nach einem der Ansprüche 1 bis 9, **dadurch gekennzeichnet, dass** die Position des Shuttles (2) hinsichtlich zumindest eines Freiheitsgrades im gesamten Posenverlauf (6) über eine Sensorik des Planarmotors (3) zumindest schätzbar und vorzugsweise messbar ist.

11. Planarmotor (3) nach einem der Ansprüche 1 bis 10, **dadurch gekennzeichnet, dass** an der Führungsvorrichtung (1) zumindest eine Bearbeitungsstation (11) angeordnet ist.

12. Planarmotor (3) nach einem der Ansprüche 1 bis 11, **dadurch gekennzeichnet, dass** der Planarmotor (3) zumindest einen ersten Stator (8`), der in einer ersten Transportebene (10) angeordnet ist, und zumindest einen zweiten Stator (8"), der in einer zweiten Transportebene (10`) angeordnet ist, aufweist, wobei zumindest eine Führungsvorrichtung (1) für das Shuttle (2) einen Posenverlauf (6) in einer oder beiden Richtungen von der ersten Transportebene (10) zu der zweiten Transportebene (10`) definiert.

13. Verfahren zum Transportieren eines Shuttles (2) mit einem Planarmotor (3) gemäß einem der Ansprüche 1 bis 12 wobei das Verfahren die folgenden Schritte aufweist:
- schwebend Anordnen des Shuttles (2) mit einem ersten Stator (8`) in einer Einleitpose (7) der Führungsvorrichtung (1),
- Bewegen und gegebenenfalls Beschleunigen des Shuttles (2) mit zumindest dem ersten Stator (8`) in Richtung des Posenverlaufs (6) der Führungsvorrichtung (1),
- Weiterbewegen des Shuttles (2) über zumindest eine Shuttleposition, welche in Bezug auf die Statoren (8) des Planarmotors (3) eine betriebsgerecht nicht ansteuerbare Pose ist, bis das Shuttle die Ausleitpose (9) erreicht, wobei die Führungsvorrichtung (1) das Shuttle (2) in der zumindest einen betriebsgerecht nicht ansteuerbaren Pose stützt und stabilisiert.

14. Verfahren nach Anspruch 13, **dadurch gekennzeichnet, dass** das Weiterbewegen erfolgt,
- unter Ausnutzung von Magnetfeldern, welche von Statoren (8) des Planarmotors (3) aufgebaut werden, und/oder
- unter Ausnutzung einer kinetischen Energie des Shuttles (2) und/oder
- unter Ausnutzung einer potentiellen Energie des Shuttles (2) und/oder
- durch Anschieben mit zumindest einem weiteren Shuttle und/oder
- durch Anziehen mit zumindest einem weiteren Shuttle.

## Claims

1. Planar motor (3) with at least a first stator (8') and at least one shuttle (2), wherein a guide device (1) for the at least one shuttle (2) of the planar motor (3) is provided, the guide device (1) having a first end (4) and a second end (5) and defining a pose course (6) of the shuttle (2) between the first end (4) and the second end (5), the first end (4) defining an introductory pose (7) of the shuttle (2) and the first end (4) being arranged on the first stator (8`) of the planar motor (3) in such a way that the introductory pose (7) corresponds to an operationally controllable pose (12) in relation to the first stator (8`), the second end (5) defining an exit pose (9) of the shuttle (2), the second end (5) being arranged on the first stator (8`) or a second stator (8") of the planar motor (3) in such a way that the exit pose (9) corresponds to an operationally controllable pose with respect to the first stator (8`) or the second stator (8"), **characterized in that** the pose course (6) comprising at least one pose which is an operationally non-controllable pose with respect to the stators (8', 8") of the planar motor (3), and the guide device (1) supporting and stabilizing the shuttle (2) in the at least one operationally non-controllable pose, and that the pose course (6) comprises passive movement portions, which cannot be actuated by the stators (8', 8") of the planar motor (3) and which can be traversed by the shuttle (2) with the help of kinetic and/or potential energy.

2. Planar motor (3) according to claim 1, **characterized in that** the mobility of the shuttle (2) can be ensured by the stators (8', 8") of the planar motor (3) along the pose course (6) from the first end (4) to the second end (5).

3. Planar motor (3) according to either claim 1 or claim 2, **characterized in that** the at least one operationally non-controllable pose has a deviation of the yaw angle (ψ) and/or the pitch angle (θ) and/or the roll angle (ϕ) and/or the stroke height (z) from an operationally controllable pose (12).

4. Planar motor (3) according to any of claims 1 to 3, **characterized in that** the pose course (6) of the guide device (1) runs substantially parallel to a transport plane (10) of the planar motor.

5. Planar motor (3) according to any of claims 1 to 4, **characterized in that** the guide device (1) defines a pose course (6) for the shuttle (2) in one or both directions from a first transport plane (10) to a second transport plane (10') of the planar motor (3).

6. Planar motor (3) according to claim 5, **characterized in that** the first transport plane (10) is arranged parallel to the second transport plane (10`).

7. Planar motor (3) according to claim 5, **characterized in that** the first transport plane (10) and the second transport plane (10`) enclose an angle, in particular a right angle.

8. Planar motor (3) according to any of claims 1 to 7, **characterized in that** the guide device (1) forms a bridge and/or underpass for the shuttle (2) between the first end (4) and the second end (5) and/or the guide device (1) has a mechanical guide and/or a magnetic guide and/or an electromagnetic guide and/or a pneumatic guide.

9. Planar motor (3) according to any of claims 1 to 8, **characterized in that** at least one operationally non-controllable pose violates a specification for safe and/or efficient operation of the planar motor (3), and/or **in that** at least one operationally non-controllable pose does not meet a specification for a required stability of the shuttle (2), and/or **in that** at least one operationally non-controllable pose cannot be set as such with the stators (8) of the planar motor (3).

10. Planar motor (3) according to any of claims 1 to 9, **characterized in that** the position of the shuttle (2) with regard to at least one degree of freedom in the entire pose course (6) can be at least estimated and preferably measured via a sensor system of the planar motor (3).

11. Planar motor (3) according to any of claims 1 to 10, **characterized in that** at least one processing station (11) is arranged on the guide device (1).

12. Planar motor (3) according to any of claims 1 to 11, **characterized in that** the planar motor (3) has at least a first stator (8') being arranged in a first transport plane (10) and at least a second stator (8") being arranged in a second transport plane (10`), at least one guide device (1) for the shuttle (2) defining a pose course (6) in one or both directions from the first transport plane (10) to the second transport plane (10`).

13. Method for transporting a shuttle (2) with a planar motor (3) according to any of claims 1 to 12, the method comprising the following steps:
- arranging the shuttle (2) in a floating manner with a first stator (8`) in an introductory pose (7) of the guide device (1),
- moving and, if necessary, accelerating the shuttle (2) with at least the first stator (8`) in the direction of the pose course (6) of the guide device (1),
- moving the shuttle (2) further over at least one shuttle position, which is an operationally non-controllable pose in relation to the stators (8) of the planar motor (3), until the shuttle reaches the exit pose (9), the guide device (1) supporting and stabilizing the shuttle (2) in the at least one operationally non-controllable pose.

14. Method according to claim 13, **characterized in that** the further movement is carried out by:
- using magnetic fields which are built up by stators (8) of the planar motor (3) and/or
- using kinetic energy of the shuttle (2) and/or
- using a potential energy of the shuttle (2) and/or
- pushing with at least one further shuttle and/or
- pulling with at least one further shuttle.

## Revendications

1. Moteur planaire (3) présentant au moins un premier stator (8') et au moins une navette (2), un dispositif de guidage (1) pour ladite au moins une navette (2) du moteur planaire (3) étant prévu, le dispositif de guidage (1) présentant une première extrémité (4) et une deuxième extrémité (5) et définissant une trajectoire de positions (6) de la navette (2) entre la première extrémité (4) et la deuxième extrémité (5), la première extrémité (4) définissant une position d'introduction (7) de la navette (2) et la première extrémité (4) étant agencée au niveau du premier stator (8`) du moteur planaire (3) de manière telle que la position d'introduction (7) correspond à une position (12) opérationnellement pilotable par rapport au premier stator (8'), la deuxième extrémité (5) définissant une position de sortie (9) de la navette (2), la deuxième extrémité (5) étant agencée au niveau du premier stator (8') ou d'un deuxième stator (8") du moteur planaire (3) de manière telle que la position de sortie (9), par rapport au premier stator (8') ou au deuxième stator (8"), correspond à une position opérationnellement pilotable,
**caractérisé en ce que** la trajectoire des positions (6) comprend au moins une position qui est, par rapport aux stators (8', 8") du moteur planaire (3), une position opérationnellement non pilotable et le dispositif de guidage (1) supportant et stabilisant la navette (2) dans ladite au moins une position opérationnellement non pilotable et **en ce que** la trajectoire des positions (6) comprend des sections de déplacement passives, non actionnables par les stators (8', 8") du moteur planaire (3), qui peuvent être traversées par la navette (2) à l'aide d'une énergie cinétique et/ou potentielle.

2. Moteur planaire (3) selon la revendication 1, **caractérisé en ce que** la mobilité de la navette (2) le long de la trajectoire des positions (6) depuis la première extrémité (4) jusqu'à la deuxième extrémité (5) peut être assurée par les stators (8', 8") du moteur planaire (3).

3. Moteur planaire (3) selon la revendication 1 ou 2, **caractérisé en ce que** ladite au moins une position opérationnellement non pilotable présente une déviation de l'angle de lacet (ψ) et/ou de l'angle de tangage (θ) et/ou de l'angle de roulis (ϕ) et/ou de la hauteur d'élévation (z) par rapport à une position opérationnellement pilotable (12).

4. Moteur planaire (3) selon l'une quelconque des revendications 1 à 3, **caractérisé en ce que** la trajectoire des positions (6) du dispositif de guidage (1) s'étend de manière sensiblement parallèle à un plan de transport (10) du moteur planaire.

5. Moteur planaire (3) selon l'une quelconque des revendications 1 à 4, **caractérisé en ce que** le dispositif de guidage (1) définit, pour la navette (2), une trajectoire des positions (6) dans un ou dans les deux sens depuis un premier plan de transport (10) vers un deuxième plan de transport (10') du moteur planaire (3).

6. Moteur planaire (3) selon la revendication 5, **caractérisé en ce que** le premier plan de transport (10) est agencé parallèlement au deuxième plan de transport (10').

7. Moteur planaire (3) selon la revendication 5, **caractérisé en ce que** le premier plan de transport (10) et le deuxième plan de transport (10') forment un angle, en particulier un angle droit, entre eux.

8. Moteur planaire (3) selon l'une quelconque des revendications 1 à 7, **caractérisé en ce que** le dispositif de guidage (1) forme, entre la première extrémité (4) et la deuxième extrémité (5), un pont et/ou un passage inférieur pour la navette (2) et/ou le dispositif de guidage (1) présente un guidage mécanique et/ou un guidage magnétique et/ou un guidage électromagnétique et/ou un guidage pneumatique.

9. Moteur planaire (3) selon l'une quelconque des revendications 1 à 8, **caractérisé en ce qu'**au moins une position opérationnellement non pilotable porte atteinte à une spécification pour un fonctionnement sûr et/ou efficace du moteur planaire (3) et/ou **en ce qu'**au moins une position opérationnellement non pilotable ne satisfait pas à une spécification pour une stabilité nécessaire de la navette (2) et/ou **en ce qu'**au moins une position opérationnellement non pilotable en tant que telle ne peut pas être réglée à l'aide des stators (8) du moteur planaire (3).

10. Moteur planaire (3) selon l'une quelconque des revendications 1 à 9, **caractérisé en ce que** la position de la navette (2), eu égard à au moins un degré de liberté dans l'ensemble de la trajectoire des positions (6), est au moins estimable et de préférence mesurable par l'intermédiaire d'un capteur du moteur planaire (3).

11. Moteur planaire (3) selon l'une quelconque des revendications 1 à 10, **caractérisé en ce qu'**au moins un poste de traitement (11) est agencé au niveau du dispositif de guidage (1).

12. Moteur planaire (3) selon l'une quelconque des revendications 1 à 11, **caractérisé en ce que** le moteur planaire (3) présente au moins un premier stator (8'), qui est agencé dans un premier plan de transport (10), et au moins un deuxième stator (8"), qui est agencé dans un deuxième plan de transport (10'), au moins un dispositif de guidage (1) définissant pour la navette (2) une trajectoire de positions (6) dans un ou dans les deux sens depuis le premier plan de transport (10) jusqu'au deuxième plan de transport (10').

13. Procédé pour le transport d'une navette (2) à l'aide d'un moteur planaire (3) selon l'une quelconque des revendications 1 à 12, le procédé présentant les étapes suivantes :
- agencement flottant de la navette (2) à l'aide du premier stator (8') dans une position d'introduction (7) du dispositif de guidage (1),
- déplacement et le cas échéant accélération de la navette (2) à l'aide dudit au moins un premier stator (8') dans le sens de la trajectoire des positions (6) du dispositif de guidage (1),
- poursuite du déplacement de la navette (2) sur au moins une position de navette qui, par rapport aux stators (8) du moteur planaire (3), est une position opérationnellement non pilotable, jusqu'à ce que la navette atteigne la position de sortie (9), le dispositif de guidage (1) supportant et stabilisant la navette (2) dans ladite au moins une position opérationnellement non pilotable.

14. Procédé selon la revendication 13, **caractérisé en ce que** la poursuite du déplacement a lieu
- avec exploitation de champs magnétiques qui sont établis par des stators (8) du moteur planaire (3) et/ou
- avec exploitation d'une énergie cinétique de la navette (2) et/ou
- avec exploitation d'une énergie potentielle de la navette (2) et/ou
- par poussée par au moins une autre navette et/ou
- par traction par au moins une autre navette.
